# EUROPEAN PATENT APPLICATION

(11) **EP 4 675 099 A1**
(43) Date of publication of application: **07.01.2026**
(21) Application number: 25186414.6
(22) Date of filing: 30.06.2025
(51) Int. Cl.: F02M 21/02, F02M 35/10

(54) **ENGINE**

(30) Priority: 02.07.2024 JP 2024106959
(71) Applicant: Yanmar Holdings Co., Ltd., Osaka-shi, Osaka (JP)
(72) Inventor: KUWAYAMA, Wataru, Osaka (JP); KOBAYASHI, Yuki, Osaka (JP); KITSUNEZUKA, Hisaki, Osaka (JP); KITATANI, Sachi, Osaka (JP); MORITA, Kazuya, Osaka (JP)
(74) Representative: Sekiguchi, Kazuya

(57) **Abstract**

[Problem] To provide an engine capable of avoiding remaining of gas fuel and suppressing the occurrence of abnormal combustion.

[Solution] An engine includes: a cylinder head; an intake port that is formed in the cylinder head; a surge tank placed on one side in an up-down direction with respect to an inlet portion of the intake port; a communication passage that communicates between the surge tank and the intake port; and a gas fuel injector that injects a gas fuel. An injection port of the gas fuel injector is provided in the communication passage only on an other side in the up-down direction with respect to a central axis of the communication passage.

## Description

### TECHNICAL FIELD

The present invention relates to an engine.

### BACKGROUND ART

Patent Document 1 discloses an engine including a cylinder head, an air supply pipe connected to an intake port of the cylinder head, and a fuel gas supplying device that is provided in the air supply pipe and injects fuel gas into air flowing through an air supply passage of the air supply pipe.

### PRIOR ART DOCUMENT

### PATENT DOCUMENT

Patent Document 1: Japanese Unexamined Patent Publication No. 2018-25117

### SUMMARY OF INVENTION

### TECHNICAL PROBLEM

When the fuel gas (gas fuel) injected from the fuel gas supplying device (gas fuel injector) remains in the air supply passage, abnormal combustion due to unintended ignition of the fuel gas may occur. Therefore, it is preferable to configure the engine such that the fuel gas is quickly discharged from the air supply passage. However, Patent Document 1 does not discuss this point.

The present invention has been made to solve the above problems, and an object of the present invention is to provide an engine capable of avoiding residual gas fuel and suppressing the occurrence of abnormal combustion.

### SOLUTION TO PROBLEM

An engine according to one aspect of the invention includes: a cylinder head; an intake port that is formed in the cylinder head; a surge tank placed on one side in an up-down direction with respect to an inlet portion of the intake port; a communication passage that communicates between the surge tank and the intake port; and a gas fuel injector that injects a gas fuel; wherein an injection port of the gas fuel injector is provided in the communication passage only on an other side in the up-down direction with respect to a central axis of the communication passage.

### ADVANTAGEOUS EFFECTS OF INVENTION

With the above configuration, the gas fuel can be prevented from remaining and the occurrence of abnormal combustion can be suppressed.

### BRIEF DESCRIPTION OF DRAWINGS

FIG. 1 is an explanatory diagram schematically illustrating a schematic configuration of an engine according to an embodiment of the present invention.
FIG. 2 is a perspective view illustrating a schematic configuration of the engine as viewed from the left front.
FIG. 3 is a side view illustrating a configuration of an adapter provided in the engine.
FIG. 4 is a cross-sectional view of the adapter.
FIG. 5 is an explanatory diagram schematically illustrating a configuration of a combustion chamber of the engine.
FIG. 6 is an explanatory diagram for explaining opening and closing timings of an intake valve and an exhaust valve provided in the engine.
FIG. 7 is a bottom view illustrating a configuration of a tip end portion of a liquid fuel injector provided in the engine.
FIG. 8 is a flowchart illustrating a flow of switching from a liquid fuel mode to a gas fuel mode of the engine.
FIG. 9 is an explanatory diagram for describing an injection amount of a liquid fuel per unit time and an injection amount of a gas fuel per unit time when the mode is switched from the liquid fuel mode to the gas fuel mode.
FIG. 10 is a graph showing a change in the pressure of the liquid fuel injected from the liquid fuel injector.

### DESCRIPTION OF EMBODIMENTS

An embodiment of the present invention will be described below with reference to the drawings.

### [1. Schematic Configuration of Engine]

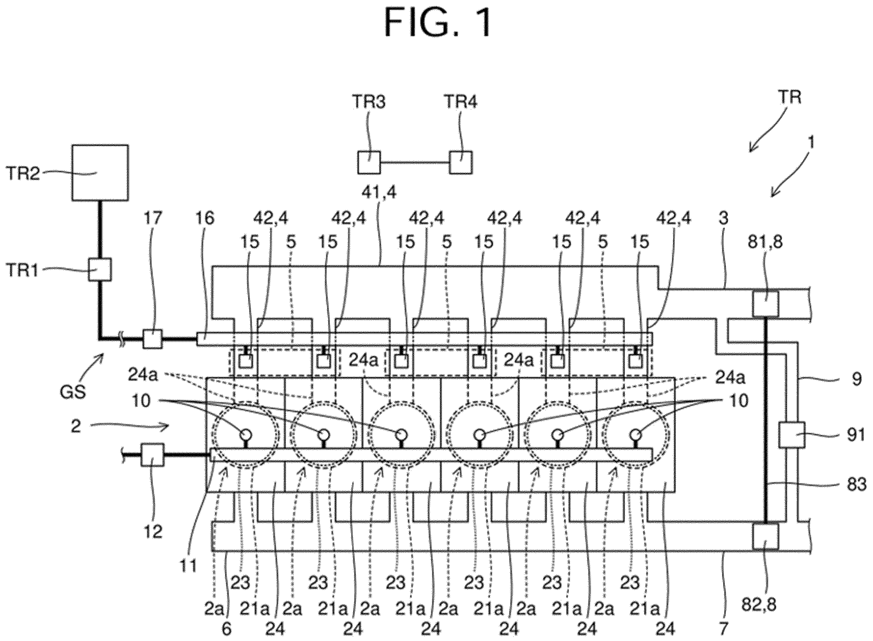

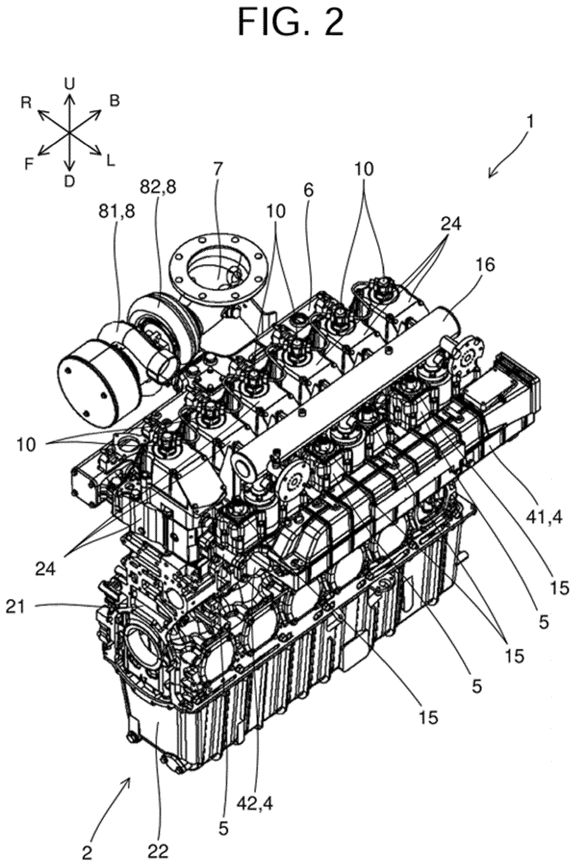

FIG. 1 is an explanatory diagram schematically illustrating a schematic configuration of an engine 1 according to an embodiment of the present invention. FIG. 2 is a perspective view illustrating a schematic configuration of the engine 1 as viewed from the left front. The engine 1 is mounted on, for example, a tractor TR. The engine 1 may be mounted on an agricultural machine such as a combine harvester, a construction machine such as a hydraulic excavator, a ship, or the like, in addition to the tractor TR.

The engine 1 of the present embodiment has a liquid fuel mode and a gas fuel mode. In the liquid fuel mode, the engine 1 compresses air sucked from the outside (also referred to as intake air), injects liquid fuel into the high-temperature air, and combusts the liquid fuel (self ignition) to obtain power. In the present embodiment, the above-described liquid fuel is light oil, but the present invention is not limited thereto. For example, the liquid fuel may be heavy oil, biofuel, or the like. That is, the liquid fuel mode is, for example, a mode in which the engine 1 functions as a diesel engine.

In the gas fuel mode, the engine 1 injects the gas fuel into intake air to generate the air-fuel mixture, compresses the air-fuel mixture, injects the liquid fuel into the high-temperature air-fuel mixture, and combusts the gas fuel (in the air-fuel mixture) to obtain power. More specifically, the gas fuel is ignited and combusted by self-ignition of the liquid fuel injected into the high-temperature air-fuel mixture. That is, in the gas fuel mode, the liquid fuel functions as an ignition fuel. In the present embodiment, the gas fuel is hydrogen, but the present invention is not limited thereto. For example, the gas fuel may be ammonia, natural gas, or the like.

The engine 1 includes an engine body 2, an intake pipe 3, an intake manifold 4, an adapter 5, an exhaust manifold 6, an exhaust pipe 7, and a turbocharger 8. The engine body 2 includes a cylinder block 21, an oil pan 22, a piston 23, and a cylinder head 24. That is, the engine 1 includes the cylinder block 21, the oil pan 22, the piston 23, and the cylinder head 24.

The directions in the present embodiment are defined as follows. In particular, as illustrated in FIG. 2, a direction in which the cylinder block 21 and the oil pan 22 are arranged is referred to as an up-down direction, a direction in which the oil pan 22 is located with respect to the cylinder block 21 is referred to as "down", and a direction opposite to "down" (a direction in which the cylinder head 24 is located with respect to the cylinder block 21) is referred to as "up". A direction in which the intake manifold 4 is located with respect to the cylinder block 21 from the down side toward the up side is referred to as "left", and a direction opposite to "left" (a direction in which the exhaust manifold 6 is located) is referred to as "right". A direction perpendicular to the up-down direction and the left-right direction is referred to as a front-rear direction, a side on which a compressor 81 described below included in the turbocharger 8 is located is referred to as "front", and a side on which a turbine 82 described below included in the turbocharger 8 is located is referred to as "rear". In the drawings, the front side, the rear side, the right side, the left side, the up side, and the down side are denoted by the symbols "F", "B", "R", "L", "U", and "D", respectively, when necessary. These directions are names merely used for the explanation and are not intended to limit the actual positional relationships and directions.

The cylinder block 21 is composed of a rectangular parallelepiped metallic member extending in the front-rear direction, and the longitudinal direction of the cylinder block 21 is located along the front-rear direction. The oil pan 22 that stores lubricant oil is connected to a lower portion of the cylinder block 21.

The cylinder block 21 is provided with a cylinder 21a having a cylindrical shape extending in the up-down direction. The cylinder 21a extends downward from the upper surface portion of the cylinder block 21. A plurality of (six in the present embodiment) cylinders 21a are arranged in the front-rear direction. That is, the engine 1 of the present embodiment includes a plurality of (six in the present embodiment) cylinders 21a.

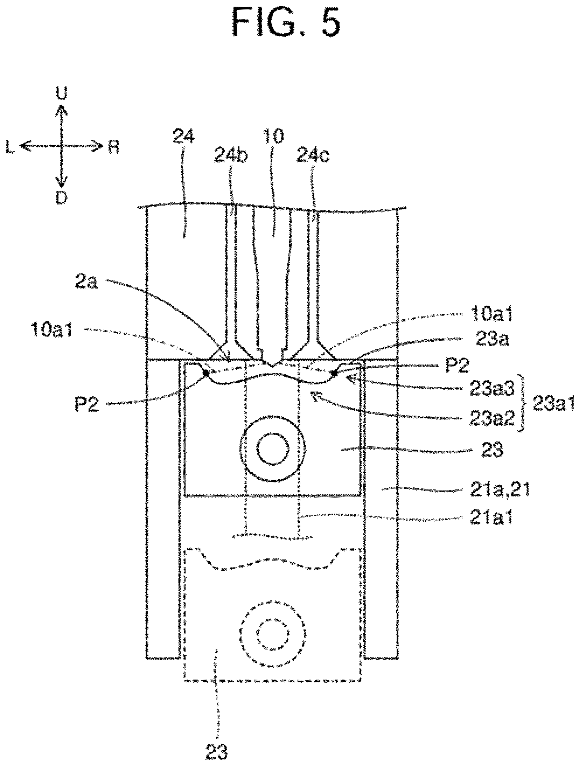

The piston 23 is housed in each cylinder 21a so as to be slidable in the up-down direction in the cylinder 21a (see also FIG. 5 described below). That is, the piston 23 reciprocates in the cylinder 21a. Each piston 23 is composed of a cylindrical metallic member.

Each piston 23 is connected to a crankshaft (not illustrated) via a connecting rod (not illustrated). The crankshaft is supported at a lower portion of the cylinder block 21 so as to be rotatable with respect to the cylinder block 21. Each piston 23 reciprocates in each cylinder 21a to rotate the crankshaft, so that power (also referred to as rotational power) can be extracted from the engine 1 (crankshaft) to the outside.

The cylinder head 24 is composed of a substantially rectangular parallelepiped metallic member and is connected to an upper portion of the cylinder block 21. The cylinder head 24 is provided corresponding to each cylinder 21a of the cylinder block 21. That is, in the present embodiment, six cylinder heads 24 are provided. Each cylinder head 24 is placed above each cylinder 21a. A space surrounded by an inner peripheral surface of the cylinder 21a, a top surface 23a of the piston 23 (see FIG. 5 described below), and a lower surface of the cylinder head 24 is referred to as a combustion chamber 2a.

An intake port 24a is formed in each cylinder head 24. That is, the engine 1 includes a plurality of (six in the present embodiment) intake ports 24a. More specifically, the intake port 24a extends downward from the left side surface of each cylinder head 24 toward the right side and is connected to each combustion chamber 2a (each cylinder 21a). That is, the cylinder 21a is connected to the intake port 24a.

The cylinder head 24 is provided with a plurality of (six in the present embodiment) liquid fuel injectors 10 each corresponding to each combustion chamber 2a (each cylinder 21a). That is, the engine 1 includes the liquid fuel injector 10 attached to the cylinder head 24.

Each of the liquid fuel injectors 10 injects the liquid fuel that is stored at a high pressure in a common rail 11 into a corresponding one of the combustion chambers 2a at a predetermined timing. The liquid fuel is pressure-fed to the common rail 11 by a supply pump 12 that is driven by power supplied from the crankshaft via a belt (not illustrated) or the like.

The intake pipe 3 sucks air from the outside and supplies the air to the intake manifold 4. The intake manifold 4 supplies the air supplied from the intake pipe 3 to each combustion chamber 2a (each cylinder 21a) via the adapter 5 and each intake port 24a. Therefore, the air supplied from the intake manifold 4 flows through each intake port 24a.

The intake manifold 4 is composed of a metallic member integrally having a surge tank 41 connected to the intake pipe 3 and a plurality of branch pipes 42 extending from the surge tank 41. That is, the engine 1 includes the surge tank 41. The surge tank 41 is provided to suppress pulsation of air (intake pulsation) supplied to each of the combustion chambers 2a. The plurality of branch pipes 42 are connected to the adapter 5.

The adapter 5 is connected to each branch pipe 42 and each intake port 24a (cylinder head 24). In the present embodiment, the adapter 5 enables connection between two adjacent branch pipes 42 and two adjacent intake ports 24a. Therefore, in the present embodiment, three adapters 5 are provided. The configuration of the adapter 5 will be described below.

Each adapter 5 is provided with two gas fuel injectors 15 corresponding to two adjacent combustion chambers 2a (two adjacent cylinders 21a). That is, the engine 1 includes a plurality of (six in the present embodiment) gas fuel injectors 15 each corresponding to each cylinder 21a.

Each gas fuel injector 15 injects the gas fuel stored in a gas fuel supply pipe 16 at a predetermined timing. The gas fuel supply pipe 16 is connected to a gas fuel tank TR2 that stores the gas fuel via a pressure control valve 17 and a valve unit TR1.

The pressure control valve 17 can adjust the pressure of the gas fuel stored in the gas fuel supply pipe 16. The valve unit TR1 includes various control valves. The various control valves include an on-off valve that can switch between on and off of the communication between the gas fuel supply pipe 16 and the gas fuel tank TR2, a bleed valve that is used when the gas fuel is discharged from the gas fuel supply pipe 16 or the gas fuel tank TR2, and the like.

The valve unit TR1 and the gas fuel tank TR2 are provided in the tractor TR separately from the engine 1. The valve unit TR1 and the gas fuel tank TR2 are not limited to the above-described configuration, and may be provided integrally with the engine 1, for example.

In the present embodiment, the gas fuel injectors 15, the gas fuel supply pipe 16, the pressure control valve 17, the valve unit TR1, and the gas fuel tank TR2 are collectively referred to as a gas fuel supply portion GS.

The exhaust manifold 6 collectively discharges the exhaust gas discharged from the combustion chambers 2a to the exhaust pipe 7. The exhaust pipe 7 discharges the exhaust gas collected in the exhaust manifold 6 to the outside.

The turbocharger 8 has a compressor 81 provided in the intake pipe 3, a turbine 82 provided in the exhaust pipe 7, and a connecting shaft 83 that connects the compressor 81 and the turbine 82. The turbine 82 rotates by being hit by the exhaust gas flowing through the exhaust pipe 7. The compressor 81 is driven by the rotational power of the turbine 82 transmitted via the connecting shaft 83, and compresses air sucked from the outside. Therefore, the amount of air supplied to each combustion chamber 2a (each cylinder 21a) can be increased by the turbocharger 8.

The intake pipe 3 and the exhaust pipe 7 are configured to be able to communicate with each other by a bypass pipe 9. More specifically, one end portion of the bypass pipe 9 is connected to the intake pipe 3 and the other end portion of the bypass pipe 9 is connected to the exhaust pipe 7. The bypass pipe 9 is provided with a bypass valve 91 that enables switching between on and off of communication between the intake pipe 3 and the exhaust pipe 7. When the bypass valve 91 is operated to allow the intake pipe 3 and the exhaust pipe 7 to communicate with each other, a portion of the sucked air is directly discharged to the exhaust pipe 7 (without passing through the engine body 2). Thus, the air-fuel ratio for the combustion in each combustion chamber 2a is adjusted. The air-fuel ratio means a mixing ratio of air and fuel (liquid fuel, gas fuel).

The tractor TR on which the engine 1 is mounted is provided with a control device TR3 in addition to the engine 1, the valve unit TR1, and the gas fuel tank TR2. The control device TR3 is composed of an electronic control unit (ECU). The control device TR3 electrically controls each portion of the tractor TR including the engine 1. A sensor TR4 is connected to the control device TR3.

The sensor TR4 detects information related to the engine 1 and outputs the detected information to the control device TR3. In the present embodiment, the sensor TR4 includes a plurality of types of sensors. Each of the plurality of types of sensors is connected to the control device TR3 so that a signal from the sensor can be input to the control device TR3. The plurality of types of sensors include, for example, a pressure sensor that detects the pressure in the combustion chamber 2a, a leakage sensor that detects leakage of the gas fuel, and the like. The control device TR3 is not limited to the above-described configuration, and may be provided integrally with the engine 1, for example.

### [2. Configuration of Adapter]

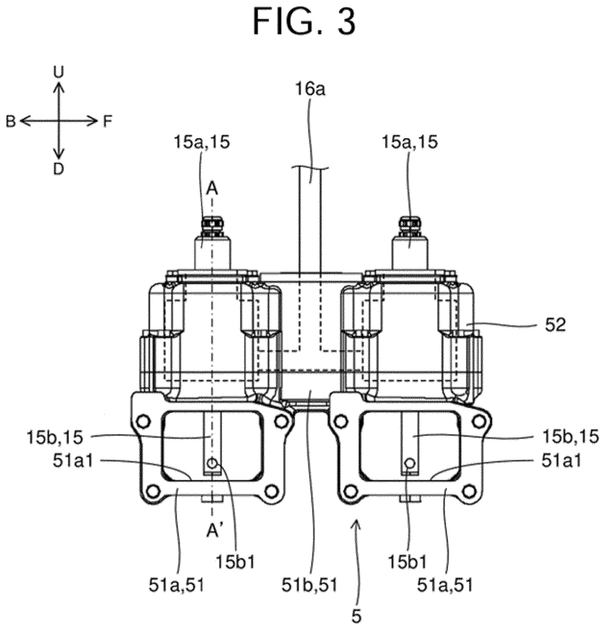

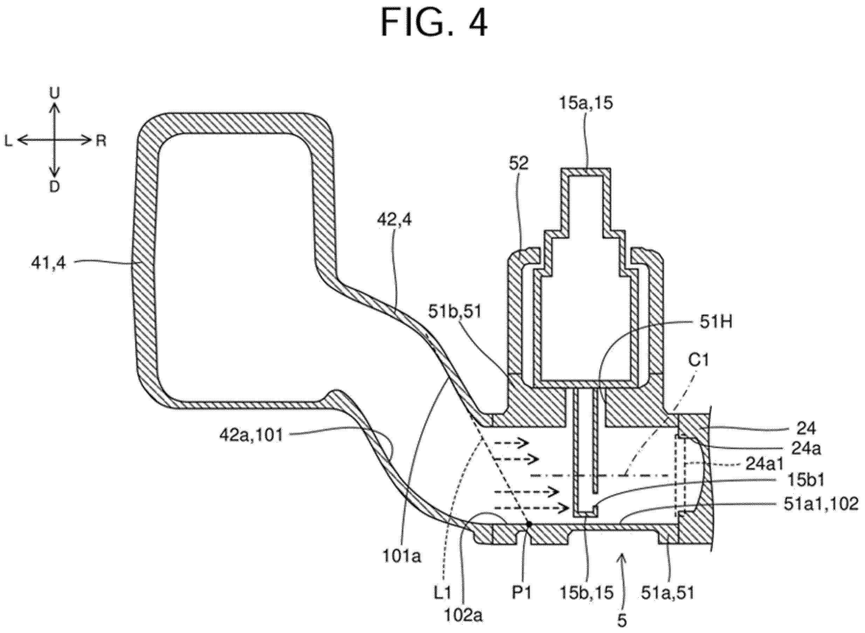

The configuration of the adapter 5 will be described with reference to FIGS. 3 and 4. FIG. 3 is a side view illustrating the configuration of the adapter 5. FIG. 4 is a cross-sectional view of the adapter 5 taken along line A-A ' in FIG. 3 in the left-right direction. The adapter 5 includes a flow passage portion 51 and a cover 52.

The flow passage portion 51 is formed of a metallic member integrally including a pair of blocks 51a arranged in the front-rear direction and a flat plate 51b that extends horizontally and connects upper portions of the blocks 51a to each other. Each block 51a is provided with a passage 51a1 that passes through the block 51a in the left-right direction. That is, a plurality of passages 51a1 are integrally provided in the adapter 5. Each passage 51a1 is formed in a rectangular shape in a side view. The shape of the passage 51a1 is not limited to the above, and may be, for example, a circular shape, an elliptical shape, a polygonal shape other than a rectangular shape, or the like. The upper portion of the adapter 5 is provided with a through hole 51H that extends upward from the upper surface of each passage 51a1 and passes through (the upper portion of) the block 51a and the flat plate 51b.

The gas fuel injector 15 is attached to the flow passage portion 51. In the present embodiment, the gas fuel injector 15 is attached to the flow passage portion 51 correspondingly to the passage 51a1. To be specific, two gas fuel injectors 15 are provided for one flow passage portion 51.

The gas fuel injector 15 has a main body portion 15a and a nozzle 15b that protrudes downward from a lower surface portion of the main body portion 15a. That is, the nozzle 15b protrudes toward the other side in the up-down direction (downward in the present embodiment). The main body portion 15a includes an electromagnetic valve and the like. For convenience, the inside of the main body portion 15a is not illustrated in FIG. 4.

An injection port 15b1 is provided on the right side (the side facing the intake port 24a) of the tip end portion (the end portion on the lower side) of the nozzle 15b. The injection port 15b1 is formed in a circular shape in a side view. The shape of the injection port 15b1 is not limited to the above, and may be, for example, an elliptical shape, a rectangular shape, a polygonal shape other than a rectangular shape, or the like. When the gas fuel injector 15 injects a gas fuel, the gas fuel is injected from the injection port 15b1.

The nozzle 15b may be configured by bending the tip end portion to the right (in a direction toward the intake port 24a). In this case, the injection port 15b1 is preferably provided at the tip end portion so as to face the intake port 24a.

When the gas fuel injector 15 is attached to the flow passage portion 51, the gas fuel injector 15 is moved from the upper side of the flow passage portion 51 toward the lower side while the nozzle 15b corresponds to (is aligned with) the through hole 51H. Then, the gas fuel injector 15 can be placed in the flow passage portion 51 while the nozzle 15b is inserted into the through hole 51H.

A distribution pipe 16a extending from the gas fuel supply pipe 16 (see FIGS. 1 and 2) is connected to each of the gas fuel injectors 15 attached to the flow passage portion 51. The distribution pipe 16a is configured by branching a lower end portion of a metal tubular member extending in the up-down direction to the front and the rear. The gas fuel injectors 15 are connected to the branched front side and rear side of the lower end portion of the distribution pipe 16a.
The upper end portion of the distribution pipe 16a is connected to the gas fuel supply pipe 16.

A portion of the gas fuel injector 15 attached to the flow passage portion 51 is covered with a cover 52. The cover 52 protects the gas fuel injector 15 (particularly, the main body portion 15a).

In particular, as illustrated in FIG. 4, one end portion (an end portion on the left side) of the passage 51a1 of the flow passage portion 51 is connected to a pipe line 42a of the branch pipe 42, and the other end portion (an end portion on the right side) of the passage 51a1 of the flow passage portion 51 is connected to the inlet portion 24a1 of the intake port 24a. In the present embodiment, the inlet portion 24a1 of the intake port 24a means an end portion of the intake port 24a on the left side. Therefore, the air supplied from the intake pipe 3 (see FIG. 1) to the surge tank 41 flows through the pipe line 42a of the branch pipe 42 and the passage 51a1 of the flow passage portion 51 and is supplied to the intake port 24a. That is, the surge tank 41 and the intake port 24a communicate with each other through the pipe line 42a of the branch pipe 42 and the passage 51a1 of the flow passage portion 51.

In the present embodiment, the pipe line 42a of the branch pipe 42 and the passage 51a1 of the flow passage portion 51 are collectively referred to as a communication passage 100. That is, the engine 1 of the present embodiment includes the communication passage 100, and the surge tank 41 and the intake port 24a communicate with each other through the communication passage 100.

In particular, the pipe line 42a of the branch pipe 42 is referred to as a first communication passage 101, and the passage 51a1 of the flow passage portion 51 is referred to as a second communication passage 102. That is, the communication passage 100 has the first communication passage 101 connected to the surge tank 41 and the second communication passage 102 connected to the first communication passage 101 and the intake port 24a.

In the present embodiment, the surge tank 41 is placed above the inlet portion 24a1 of the intake port 24a. That is, the surge tank 41 is placed on one side in the up-down direction (upper side in the present embodiment) with respect to the inlet portion 24a1 of the intake port 24a. The branch pipe 42 extending from the surge tank 41 extends from the left to the right while being inclined downward and is connected to the adapter 5 (particularly, the flow passage portion 51). Therefore, the pipe line 42a of the branch pipe 42 also extends from the left to the right while being inclined downward. That is, the first communication passage 101 (the pipe line 42a of the branch pipe 42 in the present embodiment) is inclined toward the other side (the lower side in the present embodiment) in the up-down direction from the surge tank 41 side (the left side in the present embodiment) toward the second communication passage 102 side (the right side in the present embodiment).

More specifically, a first wall surface 101a is located on the upper side of the first communication passage 101, and a second wall surface 102a is located on the lower side of the second communication passage 102. That is, the first communication passage 101 includes the first wall surface 101a located on one side (upper side in the present embodiment) in the up-down direction, and the second communication passage 102 includes the second wall surface 102a located on the other side (lower side in the present embodiment) in the up-down direction. The injection port 15b1 of the gas fuel injector 15 is located on the lower side of the second communication passage 102 (between the central axis C1 of the second communication passage 102 and the second wall surface 102a in the up-down direction). Specifically, the injection port 15b1 is located on the lower side of the second communication passage 102 out of the lower side of the second communication passage 102 and the upper side of the second communication passage 102 (between the central axis C1 of the second communication passage 102 and the wall surface of the second communication passage 102 facing the second wall surface 102a in the up-down direction). That is, the injection port 15b1 is provided in the communication passage 100 (the second communication passage 102 in the present embodiment) only on the other side (the lower side in the present embodiment) in the up-down direction with respect to the central axis C1 of the communication passage 100.

The first wall surface 101a is inclined such that a first intersection point P1 between a straight line L1 extending along the first wall surface 101a toward the second wall surface 102a and the second wall surface 102a is located to be shifted leftward from the injection port 15b1. That is, the straight line L1 intersects with the second wall surface 102a at a position shifted to the first communication passage 101 side (left side in the present embodiment) with respect to the injection port 15b1. Thus, the air flowing near the first wall surface 101a in the first communication passage 101 flows along the first wall surface 101a and toward the second wall surface 102a. Therefore, the air flowing through the second communication passage 102 flows faster on the lower side of the second communication passage 102 than on the upper side of the second communication passage 102.
In other words, the flow velocity of the air flowing through the second communication passage 102 is higher on the lower side than on the upper side (see the dashed arrow in FIG. 4).

With the above configuration, for example, the gas fuel that is injected from the injection port 15b1 can be quickly supplied to the intake port 24a as compared with a configuration in which the injection port 15b1 is placed on one side in the up-down direction (upper side in the present embodiment) with respect to the central axis C1 of the communication passage 100. That is, the gas fuel can be quickly discharged from the communication passage 100. Thus, the gas fuel can be prevented from remaining, for example, near the injection port 15b1. Therefore, it is possible to prevent the remaining gas fuel from being unintentionally ignited and causing abnormal combustion. Thus, the gas fuel can be prevented from remaining, and the occurrence of abnormal combustion can be suppressed.

The following configuration is preferable from the viewpoint of improving the degree of freedom of the arrangement layout of the gas fuel injector 15 while improving the discharge performance of the gas fuel from the communication passage 100. That is, as in the present embodiment, in a configuration in which the gas fuel injector 15 has a nozzle 15b that protrudes toward the other side in the up-down direction (downward in the present embodiment), the injection port 15b1 is preferably provided in the nozzle 15b.

The following configuration is preferable from the viewpoint of reliably realizing a configuration in which the flow velocity of the air flowing through the second communication passage 102 in which the injection port 15b1 is provided is higher on the lower side than on the upper side. That is, as in the present embodiment, it is preferable that the first communication passage 101 connected to the second communication passage 102 is inclined to the other side (lower side in the present embodiment) in the up-down direction from the surge tank 41 side toward the second communication passage 102 side.

In the configuration in which the first communication passage 101 includes the first wall surface 101a on the upper side and the second communication passage 102 includes the second wall surface 102a on the lower side, the following configuration is preferable from the viewpoint of causing the first wall surface 101a to function as an air guide plate that guides the air flowing near the first wall surface 101a to the second wall surface 102a. That is, as in the present embodiment, it is preferable that the straight line L1 extending along the first wall surface 101a toward the second wall surface 102a intersects with the second wall surface 102a at a position shifted to the first communication passage 101 side (left side in the present embodiment) with respect to the injection port 15b1.

As described above, in the present embodiment, three adapters 5 are provided and two passages 51a1 (second communication passages 102) are integrally provided in each adapter 5. That is, the engine 1 of the present embodiment includes a plurality of communication passages 100 (particularly, the second communication passages 102). In particular, in one adapter 5, the intake ports 24a respectively connected to the plurality of passages 51a1 formed in the adapter 5 are adjacent to each other. That is, in the present embodiment, the communication passages 100 (the second communication passages 102) corresponding to the adjacent intake ports 24a are integrally formed.

When the communication passages 100 corresponding to the adjacent intake ports 24a are integrally formed, for example, the number of components is reduced as compared with a configuration in which the communication passages 100 are separately provided. Thus, the gas fuel injector 15 can be easily arranged in a compact manner, and a configuration in which the injection port 15b1 of the gas fuel injector 15 is arranged close to the intake port 24a can be easily realized. Therefore, even in the configuration including the plurality of intake ports 24a and the plurality of communication passages 100, the following configuration is preferable from the viewpoint of reliably improving the discharge performance of the gas fuel from the communication passages 100 and reliably suppressing abnormal combustion by disposing the injection port 15b1 closer to the intake port 24a. That is, as illustrated in FIG. 3, it is preferable that the communication passages 100 (the second communication passages 102 in the present embodiment) corresponding to the adjacent intake ports 24a are integrally formed.

From the viewpoint of easily increasing the exhaust amount of the engine 1 (while suppressing abnormal combustion), as illustrated in FIG. 1, it is preferable to include a plurality of cylinders 21a each connected to each intake port 24a. The exhaust amount of the engine 1 means a difference between the volume of the combustion chamber 2a when the piston 23 is located at the bottom dead center and the volume of the combustion chamber 2a when the piston 23 is located at the top dead center.

### [3. Configuration of Combustion Chamber]

The configuration of the combustion chamber 2a will be described with reference to FIG. 5. FIG. 5 is an explanatory diagram schematically illustrating the configuration of the combustion chamber 2a. In FIG. 5, the piston 23 located at the top dead center is indicated by a solid line, and the piston 23 located at the bottom dead center is indicated by a broken line. As described above, the combustion chamber 2a means a space surrounded by the inner peripheral surface of the cylinder 21a, the top surface 23a of the piston 23, and the lower surface of the cylinder head 24.

A recess 23a1 is formed on the top surface 23a of the piston 23. That is, the piston 23 has the recess 23a1 on the top surface 23a. The recess 23a1 includes a bottom surface portion 23a2 and a side surface portion 23a3. The bottom surface portion 23a2 constitutes a bottom surface of the recess 23a1, and the portion of the bottom surface portion near the center in the horizontal direction protrudes upward. The side surface portion 23a3 constitutes a side surface of the recess 23a1 and is formed in a substantially annular shape in a plan view. In detail, the side surface portion 23a3 is inclined downward from the outer side toward the inner side, and the lower edge of the side surface portion 23a3 is connected to the outer peripheral edge of the bottom surface portion 23a2. The bottom surface portion 23a2 is not limited to the above configuration. For example, the bottom surface portion 23a2 may be flat. That is, the portion of the bottom surface portion 23a2 near the center in the horizontal direction may not protrude upward.

As described above, the liquid fuel injector 10 is attached to the cylinder head 24. The liquid fuel injector 10 is placed such that the tip end portion (end portion on the lower side) of the liquid fuel injector 10 slightly protrudes from the lower surface of the cylinder head 24.

The cylinder head 24 is further provided with an intake valve 24b that enables air to be supplied to the combustion chamber 2a and an exhaust valve 24c that enables exhaust gas to be discharged from the combustion chamber 2a. The intake valve 24b and the exhaust valve 24c are provided in the cylinder head 24 so as to be movable in the up-down direction.

At the upper end position, the intake valve 24b turns off the communication between the intake port 24a and the combustion chamber 2a and cuts off the supply of air from the intake port 24a to the combustion chamber 2a. When the intake valve 24b moves downward from the upper end position, the communication between the intake port 24a and the combustion chamber 2a is turned on, and air is supplied from the intake port 24a to the combustion chamber 2a. The amount of air supplied from the intake port 24a to the combustion chamber 2a is adjusted in accordance with the amount of downward movement (also referred to as the amount of lift) of the intake valve 24b. Hereinafter, a state where the intake valve 24b is located at the upper end position may be referred to as a closed state of the intake valve 24b, and a state where the intake valve 24b is moved downward from the upper end position (a state other than the upper end position) may be referred to as an open state of the intake valve 24b.

At the upper end position, the exhaust valve 24c turns off the communication between the combustion chamber 2a and the exhaust manifold 6 (see FIGS. 1 and 2) and cuts off the discharge of the exhaust gas from the combustion chamber 2a to the exhaust manifold 6. When the exhaust valve 24c moves downward from the upper end position, the communication between the combustion chamber 2a and the exhaust manifold 6 is turned on, and the exhaust gas is discharged from the combustion chamber 2a to the exhaust manifold 6. The amount of exhaust gas discharged from the combustion chambers 2a to the exhaust manifold 6 is adjusted in accordance with the amount of downward movement (also referred to as the amount of lift) of the exhaust valve 24c. Hereinafter, a state where the exhaust valve 24c is located at the upper end position may be referred to as a closed state of the exhaust valve 24c, and a state where the exhaust valve 24c is moved downward from the upper end position (a state other than the upper end position) may be referred to as an open state of the exhaust valve 24c.

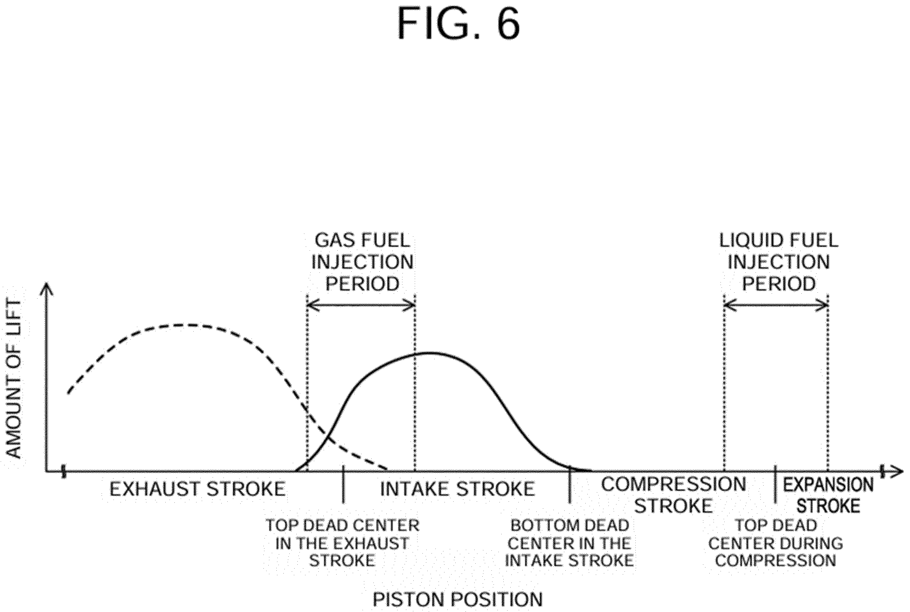

The opening and closing timings of the intake valve 24b and the exhaust valve 24c will be described with reference to FIG. 6. FIG. 6 is an explanatory diagram for explaining the opening and closing timings of the intake valve 24b and the exhaust valve 24c. FIG. 6 illustrates the lift amounts of the intake valve 24b and the exhaust valve 24c with respect to the position of the piston 23 in the cylinder 21a. In FIG. 6, the lift amount of the intake valve 24b is indicated by a solid line, and the lift amount of the exhaust valve 24c is indicated by a broken line.

In the exhaust stroke, the piston 23 moves from the bottom dead center toward the top dead center. At this time, the exhaust valve 24c is moved downward from the upper end position to become the open state, and the exhaust gas in the combustion chamber 2a generated by the immediately preceding combustion is discharged from the combustion chamber 2a to the exhaust manifold 6. The exhaust valve 24c is returned to the upper end position and becomes the closed state at the timing when the piston 23 reaches the top dead center in the exhaust stroke and moves by a predetermined amount toward the bottom dead center in the intake stroke.

Slightly before the piston 23 reaches the top dead center in the exhaust stroke, the intake valve 24b is moved downward from the upper end position to become the open state, and the supply of air from the intake port 24a to the combustion chamber 2a is started. When the supply of air from the intake port 24a to the combustion chamber 2a is started, the gas fuel injector 15 injects the gas fuel. The gas fuel injector 15 may always inject the gas fuel during the gas fuel injection period illustrated in FIG. 6, or may inject the gas fuel at a predetermined timing during the gas fuel injection period. There may be one predetermined timing or a plurality of predetermined timings during the gas fuel injection period.

In the present embodiment, the gas fuel injection period is a portion of the period during which the intake valve 24b is in the open state, but the present invention is not limited thereto, and the gas fuel injection period may be, for example, the entire period during which the intake valve 24b is in the open state.

When the piston 23 reaches the vicinity of the bottom dead center in the intake stroke, the intake valve 24b is returned to the upper end position and becomes a closed state. In the compression stroke, the piston 23 moves from the bottom dead center toward the top dead center. At this time, both the intake valve 24b and the exhaust valve 24c are maintained in the closed state.

When the piston 23 reaches near the top dead center during compression, the liquid fuel injector 10 injects the liquid fuel. That is, the liquid fuel injector 10 injects the liquid fuel when the piston 23 is located near the top dead center during compression. The liquid fuel injector 10 injects the liquid fuel a plurality of times at predetermined timings during the liquid fuel injection period illustrated in FIG. 6. The liquid fuel may be injected once during the above-described liquid fuel injection period. Thus, the injected liquid fuel functions as an ignition fuel (self-ignites), and the gas fuel mixed with the air is combusted.

In the present embodiment, the vicinity of the top dead center during compression of the piston 23 means the following. That is, when the piston 23 is located at the top dead center during compression, the crankshaft is in a range between a position in which the piston 23 corresponds to a state where the crankshaft is rotated 15 degrees in the counterclockwise direction and a position in which the piston 23 corresponds to a state where the crankshaft is rotated 15 degrees in the clockwise direction. The counterclockwise direction and the clockwise direction are directions when the engine 1 is viewed from the front. However, the angle is not limited to 15 degrees, and may be, for example, 10 degrees or 20 degrees. The angle of the crankshaft corresponding to the position of the piston 23 may be different on the clockwise side and the counterclockwise side.

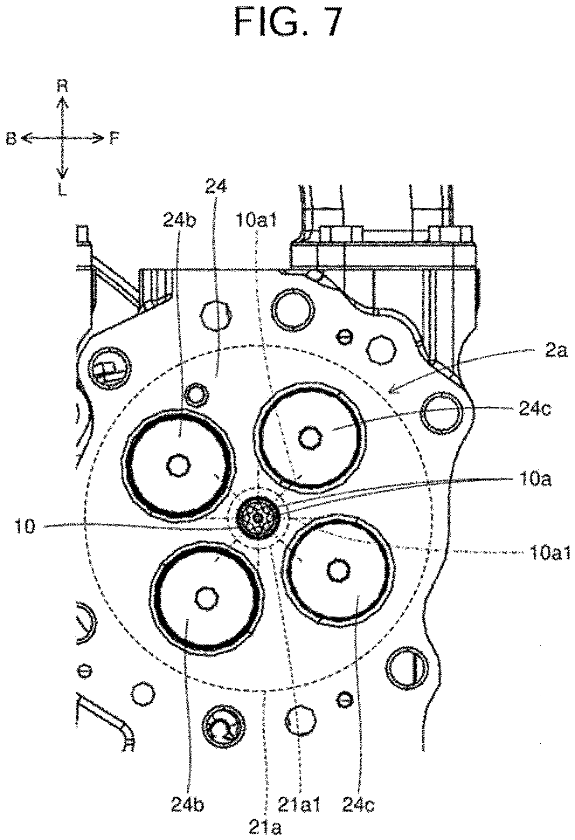

The injection of the liquid fuel in the liquid fuel injector 10 is performed at a tip end portion of the liquid fuel injector 10. More details are as follows. FIG. 7 is a bottom view illustrating a configuration of the tip end portion of the liquid fuel injector 10. The tip end portion of the liquid fuel injector 10 is placed to overlap with a central portion 21a1 (see also FIG. 5) of the cylinder 21a when the combustion chamber 2a is viewed from below.

A plurality of (eight in the present embodiment) injection holes 10a are formed in a tip end portion of the liquid fuel injector 10. That is, the liquid fuel injector 10 has a plurality of injection holes 10a that are arranged to overlap with the central portion 21a1 of the cylinder 21a when viewed from one side (the upper side in the present embodiment) or the other side (the lower side in the present embodiment) in the up-down direction. The number of the injection holes 10a is not limited to the above, and may be, for example, one, or any number (four, five, or the like) other than eight.

When the liquid fuel injector 10 injects the liquid fuel, the liquid fuel is radially injected from each injection hole 10a in the radial direction of the combustion chamber 2a. Specifically, the axis line 10a1 of each injection hole 10a extends from the injection hole 10a in the radial direction of the cylinder 21a when the combustion chamber 2a is viewed from below.

In a case where the engine 1 includes the cylinder 21a connected to the intake port 24a and the piston 23 that reciprocates in the cylinder 21a, the following configuration is preferable in order to inject the liquid fuel into the high-temperature air-fuel mixture (air and gas fuel). That is, the engine 1 preferably includes the liquid fuel injector 10 that injects the liquid fuel when the piston 23 is located near the top dead center during compression. Furthermore, when flames are uniformly propagated in the cylinder 21a (the combustion chamber 2a), the liquid fuel rapidly combusts, and the generation of particulate matter such as soot is suppressed. Therefore, it is preferable to ignite the liquid fuel in the central portion 21a1 of the cylinder 21a in the horizontal direction. From this viewpoint, as in the present embodiment, in the configuration in which the engine 1 includes the liquid fuel injector 10 attached to the cylinder head 24, the following configuration is preferable. That is, as illustrated in FIG. 7, it is preferable that the liquid fuel injector 10 have a plurality of injection holes 10a that are arranged to overlap with the central portion 21a1 of the cylinder 21a when viewed in the up-down direction, and the axis line 10a1 of each injection hole 10a extends in the radial direction of the cylinder 21a.

Particularly, when the piston 23 is located at the top dead center during compression, the second intersection point P2 between the axis line 10a1 of each injection hole 10a and the piston 23 is located on the side surface portion 23a1 of the recess 23a3 (see FIG. 5). That is, when the piston 23 is located at the top dead center during compression, the axis line 10a1 intersects with the side surface portion 23a3 of the recess 23a1.

When the piston 23 is located at the top dead center during compression and the axis line 10a1 intersects with the side surface portion 23a3 of the recess 23a1, the length (time) for the injected liquid fuel to reach the piston 23 becomes longer, for example, as compared with the case where the axis line 10a1 intersects with the bottom surface portion 23a2 of the recess 23a1. Thus, the liquid fuel is ignited before the liquid fuel reaches the piston 23, and rapid combustion of the liquid fuel is reliably achieved. Therefore, the following configuration is preferable from the viewpoint of reliably suppressing the generation of particulate matter such as soot by the rapid combustion of the liquid fuel. That is, as illustrated in FIG. 5, in the configuration in which the piston 23 has the recess 23a1 in the top surface 23a, the axis line 10a1 of the injection hole 10a preferably intersects with the side surface portion 23a3 of the recess 23a1 when the piston 23 is located at the top dead center during compression.

### [4. Switching from Liquid Fuel Mode to Gas Fuel Mode]

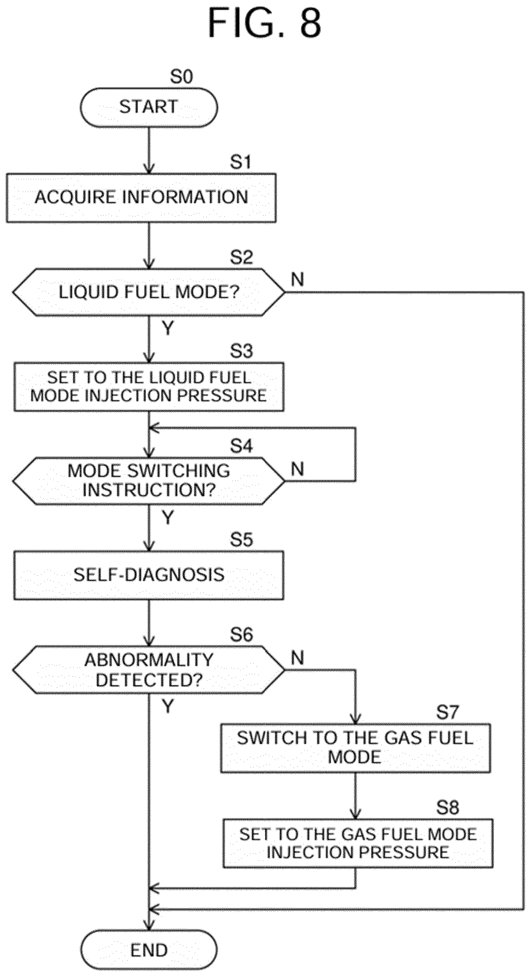

The flow of switching from the liquid fuel mode to the gas fuel mode will be described with reference to FIG. 8. FIG. 8 is a flowchart illustrating a flow of switching from the liquid fuel mode to the gas fuel mode. It is assumed that the engine 1 is in the liquid fuel mode at step S0.

In step S1, the control device TR3 (refer to FIG. 1) acquires information related to the engine 1. The acquisition of the above-described information is realized by the sensor TR4 (refer to FIG. 1) connected to the control device TR3 detecting information related to the engine 1 and outputting the detected information to the control device TR3. When the control device TR3 acquires the information related to the engine 1, the processing proceeds to the next step S2.

In step S2, the control device TR3 determines whether the engine 1 is in the liquid fuel mode. When the engine 1 is in the liquid fuel mode (Yes in step S2), the processing proceeds to next step S3. When the engine 1 is not in the liquid fuel mode (No in step S2), the present flowchart is ended.

In step S3, the control device TR3 sets the pressure of the liquid fuel that is injected from the liquid fuel injector 10 to the liquid fuel mode injection pressure. That is, the liquid fuel injector 10 injects the liquid fuel at the liquid fuel mode injection pressure in the liquid fuel mode. In the present embodiment, the above-described setting is realized by the control device TR3 controlling the supply pump 12 (refer to FIG. 1) to change the pressure of the liquid fuel that is stored in the common rail 11 (refer to FIG. 1).

In step S4, the control device TR3 determines whether a mode switching instruction has been issued. In the present embodiment, the above-described mode switching instruction is realized by the operator of the tractor TR operating a switching portion (not illustrated) provided in the tractor TR. The switching portion is, for example, a changeover switch. When a mode switching instruction has been issued (Yes in step S4), the processing proceeds to next step S5. When a mode switching instruction has not been issued (No in step S4), the control device TR3 continues to determine whether the mode switching instruction has been issued.

In step S5, the control device TR3 performs a self-diagnosis of the engine 1. The self-diagnosis includes, for example, determination of whether leakage of the gas fuel has occurred in the gas fuel supply portion GS (refer to FIG. 1). The determination is performed on the basis of information detected by the leakage sensor included in the sensor TR4. When the self-diagnosis is performed, the processing proceeds to the next step S6.

In step S6, the control device TR3 determines whether there is an abnormality in the engine 1.

In the present embodiment, the above-described determination is made based on the result of self-diagnosis. For example, when the result of the self-diagnosis includes the occurrence of leakage of the gas fuel, the control device TR3 determines that there is an abnormality in the engine 1. When there is an abnormality in the engine 1 (Yes in step S6), the present flowchart is ended (without switching from the liquid fuel mode to the gas fuel mode). When there is no abnormality in the engine 1 (No in step S6), the processing proceeds to step S7.

In step S7, the control device TR3 switches the mode of the engine 1 from the liquid fuel mode to the gas fuel mode. When the mode is switched from the liquid fuel mode to the gas fuel mode, the processing proceeds to the next step S8.

In step S8, the control device TR3 sets the pressure of the liquid fuel that is injected from the liquid fuel injector 10 to the gas fuel mode injection pressure. That is, the liquid fuel injector 10 injects the liquid fuel at the gas fuel mode injection pressure in the gas fuel mode. In the present embodiment, the gas fuel mode injection pressure is set to be lower than the liquid fuel mode injection pressure. More specifically, the control device TR3 controls the supply pump 12 to reduce the pressure of the liquid fuel that is stored in the common rail 11, thereby the pressure of the liquid fuel that is injected from the liquid fuel injector 10 is reduced. That is, the pressure of the liquid fuel injected from the liquid fuel injector 10 is smaller in the gas fuel mode (i.e., the gas fuel mode injection pressure) than in the liquid fuel mode (i.e., the liquid fuel mode injection pressure).

In the configuration in which the engine 1 has the liquid fuel mode and the gas fuel mode, particularly in the gas fuel mode, the following configuration is preferable from the viewpoint of suppressing the generation of particulate matter such as soot caused by incomplete combustion of the liquid fuel due to excessive supply of the liquid fuel as the ignition fuel. That is, as in the present embodiment, it is preferable that the pressure of the liquid fuel injected from the liquid fuel injector 10 is smaller (lower pressure) in the gas fuel mode than in the liquid fuel mode.

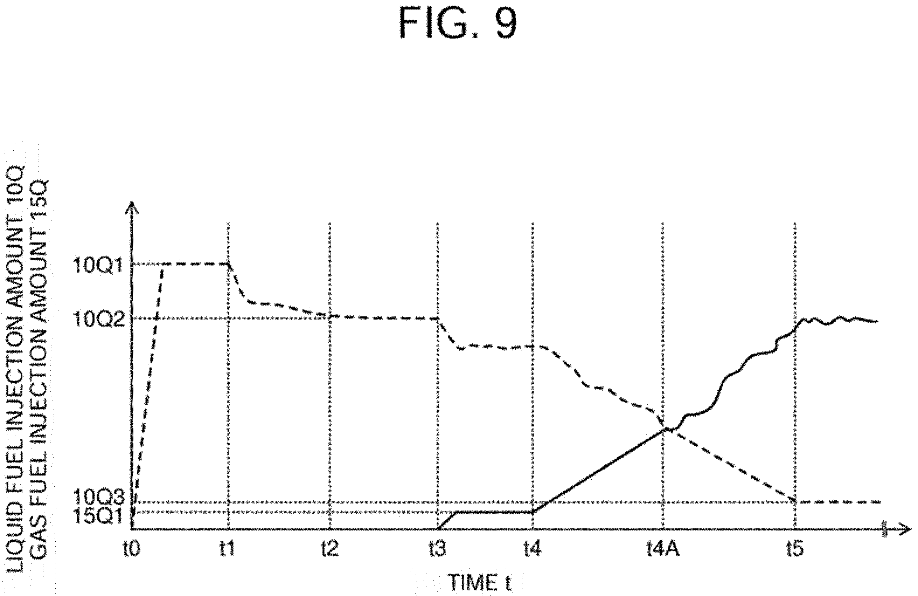

The injection amount of the liquid fuel per unit time (for example, one second) and the injection amount of the gas fuel per unit time (for example, one second) when the mode is switched from the liquid fuel mode to the gas fuel mode will be described with reference to FIG. 9. FIG. 9 is an explanatory diagram for explaining the injection amount of the liquid fuel per unit time and the injection amount of the gas fuel per unit time when the mode is switched from the liquid fuel mode to the gas fuel mode. In FIG. 9, the injection amount of the liquid fuel per unit time is indicated by a broken line, and the injection amount of the gas fuel per unit time is indicated by a solid line. Hereinafter, the injection amount of the liquid fuel per unit time may be referred to as a liquid fuel injection amount 10Q, and the injection amount of the gas fuel per unit time may be referred to as a gas fuel injection amount 15Q.

The engine 1 is started at the time t0. In the present embodiment, when the engine 1 is started, the mode of the engine 1 is set to the liquid fuel mode. Immediately after the start of the engine 1, the liquid fuel injector 10 injects the liquid fuel by a constant first liquid fuel injection amount 10Q1 in order to stabilize the power of the engine 1. When the power of the engine 1 is stabilized, the liquid fuel injection amount 10Q is reduced to be smaller than the first liquid fuel injection amount 10Q1, and is adjusted (controlled) such that a predetermined power (for example, a rated power) is obtained (see a period from the time t1 to the time t2).

At the time t2, the input of the mode switching instruction is performed by the operator, and the self-diagnosis is performed in a period from the time t2 to the time t3. During the self-diagnosis (the period from the time t2 to the time t3), the liquid fuel injector 10 injects the liquid fuel by a constant second liquid fuel injection amount 10Q2. When it is determined that there is no abnormality in the engine 1 as a result of the self-diagnosis, the mode of the engine 1 is switched from the liquid fuel mode to the gas fuel mode, and the injection of the gas fuel by the gas fuel injector 15 is started (see the time t3).

The gas fuel mode is provided with a trial period (a period from the time t3 to the time t4) and a transition period (a period from the time t4 to the time t5). The above-described trial period is provided to determine whether combustion in the gas fuel mode can be normally performed. In the trial period, the gas fuel injector 15 injects the gas fuel by a constant first gas fuel injection amount 15Q1. When the injection of the gas fuel is started, the liquid fuel injection amount 10Q naturally decreases.

The above-described transition period is provided to avoid the outputs of the engine 1 (the combustion of the gas fuel and the combustion of the liquid fuel) from becoming unstable due to the increase in the gas fuel injection amount 15Q and the decrease in the liquid fuel injection amount 10Q. The transition period includes a first transition period (a period from the time t4 to the time t4A) and a second transition period (a period from the time t4A to the time t5). In the first transition period, the gas fuel injection amount 15Q increases from the first gas fuel injection amount 15Q1 at a constant rate, and the liquid fuel injection amount 10Q gradually decreases. In the second transition period, the liquid fuel injection amount 10Q decreases at a constant rate, and the gas fuel injection amount 15Q gradually increases.

When the second transition period ends, the gas fuel injection amount 15Q is adjusted (controlled) such that a predetermined power (for example, a rated power) is obtained from the engine 1, and the liquid fuel injection amount 10Q is set to a constant third liquid fuel injection amount 10Q3 (see a period after the time t5). The change in the pressure of the liquid fuel that is injected from the liquid fuel injector 10 in the period after the time t5 will be described below.

### [5. Change in Pressure of Liquid Fuel Injected from Liquid Fuel Injector 10]

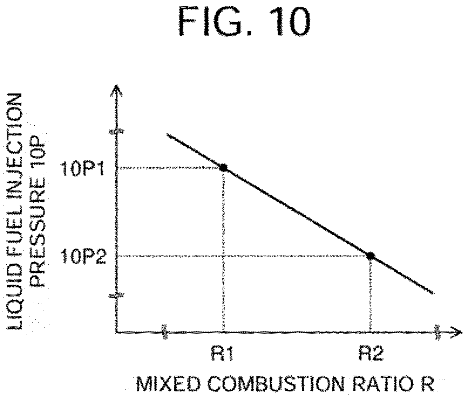

FIG. 10 is a graph showing a change in the pressure of the liquid fuel that is injected from the liquid fuel injector 10 (liquid fuel injection pressure 10P) with respect to the mixed combustion ratio R. The mixed combustion ratio R means a ratio of the amount of heat generation of the gas fuel to the total amount of heat generation (the sum of the amount of heat generation of the gas fuel and the amount of heat generation of the liquid fuel) in one combustion.

The liquid fuel injection pressure 10P decreases (becomes lower pressure) as the mixed combustion ratio R increases. For example, the liquid fuel injection pressure 10P when the mixed combustion ratio R is a first mixed combustion ratio R1 (for example, 90%) is assumed as a first injection pressure 10P1. That is, when the mixed combustion ratio R is the first mixed combustion ratio R1, the liquid fuel injector 10 injects the liquid fuel at the first injection pressure 10P1. The liquid fuel injection pressure 10P when the mixed combustion ratio R is a second mixed combustion ratio R2 (for example, 95%) higher than the first mixed combustion ratio R1 is assumed as a second injection pressure 10P2. When the first injection pressure 10P1 and the second injection pressure 10P2 are compared with each other, the second injection pressure 10P2 is smaller (lower pressure) than the first injection pressure 10P1. That is, when the mixed combustion ratio R is the second mixed combustion ratio R2 higher than the first mixed combustion ratio R1, the liquid fuel injector 10 injects the liquid fuel at the second injection pressure 10P2 lower than the first injection pressure 10P1.

As the liquid fuel injection pressure 10P becomes higher, the liquid fuel injection amount 10Q (the injection amount of the liquid fuel per unit time) increases. For example, the liquid fuel injection amount 10Q in the first injection pressure 10P1 is larger than the liquid fuel injection amount 10Q in the second injection pressure 10P2 (lower than the first injection pressure 10P1). Therefore, when it is assumed that the second mixed combustion ratio R2 higher than the first mixed combustion ratio R1 is achieved with the first injection pressure 10P1, the gas fuel injection amount 15Q (the injection amount of the gas fuel per unit time) needs to be increased as compared with the case where the second mixed combustion ratio R2 is achieved with the second injection pressure 10P2. That is, it is difficult to increase the mixed combustion ratio R in a state where the liquid fuel injection pressure 10P is maintained at a high pressure.

Therefore, as in the present embodiment, in the configuration in which the liquid fuel injector 10 injects the liquid fuel at the first injection pressure 10P1 when the mixed combustion ratio is the first mixed combustion ratio R1, the following configuration is preferable from the viewpoint of easily achieving a higher mixed combustion ratio R (than the first mixed combustion ratio R1). That is, when the mixed combustion ratio R is the second mixed combustion ratio R2 higher than the first mixed combustion ratio R1, it is preferable that the liquid fuel injector 10 injects the liquid fuel at the second injection pressure 10P2 lower than the first injection pressure 10P1.

### [6. Supplementary Description]

In the present embodiment, a case where the upper side is referred to as "one side in the up-down direction" and the lower side is referred to as "the other side in the up-down direction" has been described, but the present invention is not limited thereto. For example, the lower side may be referred to as "one side in the up-down direction", and the upper side may be referred to as "the other side in the up-down direction". That is, the upper and lower sides may be reversed.

To be specific, the surge tank 41 may be placed below the inlet portion 24a1 of the intake port 24a. In this case, the effect of the present embodiment can be obtained as long as the injection port 15b1 of the gas fuel injector 15 is arranged above the central axis C1 of the communication passage 100.

In the present embodiment, a configuration in which six cylinders 21a are provided has been described, but the present invention is not limited thereto. For example, there may be one cylinder 21a. That is, the engine 1 may be a single-cylinder engine. The number of the cylinders 21a may be any number (two, three, or the like) other than six.

Although the present embodiment has described the in-line engine 1 in which the cylinders 21a are arranged in one row in the front-rear direction, the engine 1 is not limited to the in-line type and may be, for example, a V-type.

### [7. Supplementary Notes]

The engine 1 described in the present embodiment can also be expressed as an engine described in the following supplementary notes.

An engine according to Supplementary Note (1) comprises:
a cylinder head;
an intake port that is formed in the cylinder head;
a surge tank placed on one side in an up-down direction with respect to an inlet portion of the intake port;
a communication passage that communicates between the surge tank and the intake port; and
a gas fuel injector that injects a gas fuel;
wherein an injection port of the gas fuel injector is provided in the communication passage only on an other side in the up-down direction with respect to a central axis of the communication passage.

The engine according to Supplementary Note (2) is the engine according to Supplementary Note (1), wherein
the gas fuel injector includes a nozzle that protrudes to an other side in the up-down direction, and
the injection port is provided on the nozzle.

The engine according to Supplementary Note (3) is the engine according to Supplementary Note (1) or (2), wherein
the communication passage includes
   a first communication passage connected to the surge tank, and
   a second communication passage connected to the first communication passage and the intake port,
the injection port is provided in the second communication passage, and
the first communication passage is inclined toward an other side in the up-down direction from the surge tank side toward the second communication passage side.

The engine according to Supplementary Note (4) is the engine according to Supplementary Note (3), wherein
the first communication passage includes a first wall surface located on one side in the up-down direction,
the second communication passage includes a second wall surface located on an other side in the up-down direction, and
a straight line extending along the first wall surface toward the second wall surface intersects with the second wall surface at a position shifted to the first communication passage side with respect to the injection port.

The engine according to Supplementary Note (5) is the engine according to any one of Supplementary Notes (1) to (4), comprising:
a plurality of the intake ports and a plurality of the communication passages, wherein
the communication passages corresponding to the intake ports adjacent to each other are integrally formed.

The engine according to Supplementary Note (6) is the engine according to claim (5), comprising:
a plurality of cylinders connected to the respective intake ports.

The engine according to Supplementary Note (7) is the engine according to any one of Supplementary Notes (1) to (5), comprising:
a cylinder connected to the intake port;
a piston that reciprocates in the cylinder; and
a liquid fuel injector that is attached to the cylinder head and injects a liquid fuel when the piston is located near a top dead center during compression; wherein
the liquid fuel injector has a plurality of injection holes that are arranged to overlap with a central portion of the cylinder when viewed in the up-down direction, and
an axis line of each of the injection holes extends in a radial direction of the cylinder.

The engine according to Supplementary Note (8) is the engine according to Supplementary Note (7), wherein
the piston includes a recess on a top surface of the piston, and
the axis line intersects with a side surface portion of the recess when the piston is located at the top dead center during compression.

The engine according to Supplementary Note (9) is the engine according to Supplementary Note (7) or (8), including
a liquid fuel mode in which the liquid fuel is combusted; and
a gas fuel mode in which the gas fuel is combusted using the liquid fuel as an ignition fuel,
wherein a pressure of the liquid fuel injected from the liquid fuel injector is smaller in the gas fuel mode than in the liquid fuel mode.

The engine according to Supplementary Note (10) is the engine according to any one of Supplementary Notes (7) to (9), wherein
in a case of a first mixed combustion ratio, the liquid fuel injector injects the liquid fuel at a first injection pressure, and
in a case of a second mixed combustion ratio higher than the first mixed combustion ratio, the liquid fuel injector injects the liquid fuel at a second injection pressure lower than the first injection pressure.

Although the embodiment of the present invention has been described above, the scope of the present invention is not limited thereto, and the present invention can be implemented by expanding or changing it without departing from the gist of the invention.

### INDUSTRIAL APPLICABILITY

The present invention is applicable, for example, to a work machine (an agricultural machine, a construction machine, or the like) or a ship.

### REFERENCE SIGNS LIST

1 engine
10 liquid fuel injector
10P1 first injection pressure
10P2 second injection pressure
10a injection hole
10a1 axis line
15 gas fuel injector
15b nozzle
15b1 injection port
21a cylinder
21a1 central portion
23 piston
23a top surface
23a1 recess
23a3 side surface portion
24 cylinder head
24a intake port
24a1 inlet portion
41 surge tank
100 communication passage
101 first communication passage
101a first wall surface
102 second communication passage
102a second wall surface
C1 central axis
L1 straight line
R1 first mixed combustion ratio
R2 second mixed combustion ratio

## Claims

1. An engine comprising:
a cylinder head;
an intake port that is formed in the cylinder head;
a surge tank placed on one side in an up-down direction with respect to an inlet portion of the intake port;
a communication passage that communicates between the surge tank and the intake port; and
a gas fuel injector that injects a gas fuel;
wherein an injection port of the gas fuel injector is provided in the communication passage only on an other side in the up-down direction with respect to a central axis of the communication passage.

2. The engine according to claim 1, wherein
the gas fuel injector includes a nozzle that protrudes to an other side in the up-down direction, and
the injection port is provided on the nozzle.

3. The engine according to claim 1, wherein
the communication passage includes
a first communication passage connected to the surge tank, and
a second communication passage connected to the first communication passage and the intake port,
the injection port is provided in the second communication passage, and
the first communication passage is inclined toward an other side in the up-down direction from the surge tank side toward the second communication passage side.

4. The engine according to claim 3, wherein
the first communication passage includes a first wall surface located on one side in the up-down direction,
the second communication passage includes a second wall surface located on an other side in the up-down direction, and
a straight line extending along the first wall surface toward the second wall surface intersects with the second wall surface at a position shifted to the first communication passage side with respect to the injection port.

5. The engine according to claim 1, comprising:
a plurality of the intake ports and a plurality of the communication passages, wherein
the communication passages corresponding to the intake ports adjacent to each other are integrally formed.

6. The engine according to claim 5, comprising: a plurality of cylinders connected to the respective intake ports.

7. The engine according to claim 1, comprising:
a cylinder connected to the intake port;
a piston that reciprocates in the cylinder; and
a liquid fuel injector that is attached to the cylinder head and injects a liquid fuel when the piston is located near a top dead center during compression; wherein
the liquid fuel injector has a plurality of injection holes that are arranged to overlap with a central portion of the cylinder when viewed in the up-down direction, and
an axis line of each of the injection holes extends in a radial direction of the cylinder.

8. The engine according to claim 7, wherein
the piston includes a recess on a top surface of the piston, and
the axis line intersects with a side surface portion of the recess when the piston is located at the top dead center during compression.

9. The engine according to claim 7, including a liquid fuel mode in which the liquid fuel is combusted; and
a gas fuel mode in which the gas fuel is combusted using the liquid fuel as an ignition fuel,
wherein a pressure of the liquid fuel injected from the liquid fuel injector is smaller in the gas fuel mode than in the liquid fuel mode.

10. The engine according to any one of claims 7 to 9, wherein
in a case of a first mixed combustion ratio, the liquid fuel injector injects the liquid fuel at a first injection pressure, and
in a case of a second mixed combustion ratio higher than the first mixed combustion ratio, the liquid fuel injector injects the liquid fuel at a second injection pressure lower than the first injection pressure.
